# FASCICULE DE BREVET EUROPEEN

(11) **EP 4 493 525 B1**
(45) Date de publication et mention de la délivrance du brevet: **03.12.2025**
(21) Numéro de dépôt: 23713724.5
(22) Date de dépôt: 09.03.2023
(51) Int. Cl.: C03B 9/38

(54) **INSTALLATION DE FORMAGE D'ARTICLES EN VERRE CREUX ET PROCÉDÉ DE COMMANDE D'UNE TELLE INSTALLATION**
ANLAGE ZUR HERSTELLUNG VON HOHLGLASARTIKELN UND VERFAHREN ZUR STEUERUNG SOLCH EINER ANLAGE
FACILITY FOR FORMING HOLLOW GLASS ITEMS AND METHOD FOR CONTROLLING SUCH A FACILITY

(30) Priorité: 14.03.2022 FR 2202219
(43) Date de publication de la demande: 22.01.2025
(73) Titulaire: VERALLIA PACKAGING, 92400 Courbevoie (FR)
(72) Inventeur: KLOCK, Denis, 71380 CHATENOY EN BRESSE (FR); SIATCHOUA, Patrice, 78125 LA BOISSIERE ECOLE (FR)
(74) Mandataire: Germain Maureau
(86) Numéro de dépôt international: PCT/FR2023/050324
(87) Numéro de publication internationale: WO 2023/175262

(56) Documents cités:
- GB-A- 2 011 128
- US-A- 3 860 407

## Description

La présente invention concerne une installation de formage d'articles en verre creux tels que des bouteilles, des flacons ou des pots, ainsi qu'un procédé de commande d'une telle installation.

Les articles en verre creux, généralement des articles d'emballage (choisis par exemple parmi les bouteilles, les flacons et les pots), sont fabriqués avec des machines de formage qui comprennent un ensemble d'éléments mécaniques incluant des moules ébaucheur et finisseur, l'ensemble de ces éléments étant configuré pour transformer une paraison (ou autrement dit une goutte de verre en fusion plus ou moins épaisse qui a été coupée nette) en un article en verre creux. Il est par exemple connu d'utiliser des machines dites « machines IS », IS étant l'abréviation anglophone pour « Individual Sections » qui se traduit par « sections individuelles ». En effet, les machines IS comportent une pluralité de sections individuelles incluant chacune des moules ébaucheurs et finisseurs.

Plus précisément, la paraison est dirigée grâce à un système de distribution vers une section de la machine de formage dans laquelle les étapes de formage selon le procédé de « soufflé-soufflé » ou de « pressé-soufflé » sont réalisées.

Dans le procédé « soufflé-soufflé », le moule ébaucheur est équipé dans sa partie inférieure d'un poinçon que le verre va recouvrir. Il s'agit de la 1^{ère} étape de chargement au cours de laquelle le verre forme une empreinte.

Ensuite, au cours d'une 2^{ème} étape de compression, le moule ébaucheur est fermé par un fond ébaucheur et de l'air est immédiatement introduit à travers pour pousser le verre autour du poinçon et former la bague de l'article en verre creux au cours de l'étape dite de compression.

Puis, au cours d'une 3^{ème} étape de formage de l'ébauche (ou autrement dénommée perçage), le poinçon est retiré pour permettre un soufflage d'air comprimé sur l'empreinte de manière à ce que le verre se déforme et remplisse l'espace libre du moule ébaucheur pour obtenir ladite ébauche au cours de l'étape dite de perçage. Au contact du moule ébaucheur, refroidi en permanence, l'ébauche se refroidit en surface (à une température d'environ 750°C-800°C) et acquiert une rigidité suffisante pour être, après ouverture du moule ébaucheur, au cours d'une 4^{ème} étape appelée transfert, transférée dans le moule finisseur en attente en position ouverte.

Ensuite, au cours d'une 5^{ème} étape de réchauffage dans le moule finisseur fermé, l'ébauche se réchauffe et s'allonge sous l'effet de son propre poids. Cette étape a pour effet d'homogénéiser les températures au sein de l'ébauche et donc les viscosités des couches de verre de ladite ébauche.

Dès que l'ébauche touche le fond du moule finisseur, la 6^{ème} étape de soufflage est réalisée en soufflant de l'air comprimé dans l'ébauche jusqu'à sa mise en contact avec la surface du moule finisseur pour lui donner sa forme définitive. Ce contact est maintenu quelques secondes pour rigidifier définitivement l'article en verre creux.

Ensuite, le moule finisseur est ouvert pour extraire l'article en verre creux de la section de la machine et le transférer vers d'autres dispositifs pour la suite de ses étapes de fabrication telles que la recuisson et les éventuels traitements de surface.

Dans le procédé « pressé-soufflé » qui permet l'obtention d'articles en verre creux de plus large ouverture et/ou allégés, à la différence du procédé « soufflé-soufflé », l'ébauche est pressée au lieu d'être soufflée, et ce à l'aide d'un poinçon nettement plus grand que celui du procédé « soufflé-soufflé » et par l'absence de l'étape de perçage.

Le procédé de « pressé-soufflé » comprend les étapes telles que détaillées ci-dessous.

Une 1^{ère} étape de chargement au cours de laquelle la paraison est amenée dans le moule ébaucheur.

Une 2^{ème} étape de pressage au cours de laquelle, le fond ébaucheur est mis en place sur le moule ébaucheur et le poinçon est remonté pour venir presser le verre de telle sorte qu'il remplisse l'espace entre le poinçon et le moule ébaucheur de manière à obtenir une ébauche.

L'ébauche ainsi obtenue est ensuite soumise aux mêmes étapes de transfert, réchauffage et soufflage que celles décrites pour le procédé « soufflé-soufflé ».

Compte tenu de ces étapes détaillées ci-dessus des procédés « soufflé-soufflé » et « pressé-soufflé », le formage d'un article en verre creux repose ainsi sur une déformation du verre puis sur une extraction rapide de la chaleur pour le rigidifier. Cette extraction de chaleur qui est conditionnée par des phénomènes complexes de transferts thermiques nécessite la mise en œuvre d'un refroidissement à l'air approprié des moules ébaucheur et finisseur pour les maintenir à une température donnée dite « température de consigne » pendant des plages de temps déterminées de refroidissement pour obtenir un article en verre creux de qualité.

La détermination des températures de consigne qui conditionnent donc les spécificités du refroidissement à mettre en œuvre pour obtenir l'article en verre creux souhaité repose sur différents paramètres que sont notamment la masse, les dimensions dudit article en verre, ainsi que les caractéristiques des moules ébaucheur et finisseur.

Selon les caractéristiques de l'article en verre creux souhaité et des moules utilisés, il est parfaitement à la portée de l'homme du métier (un verrier) de savoir déterminer les températures de consigne auxquelles doivent être soumis les moules ébaucheur et finisseur au cours du formage, et en fonction de ces températures de consigne, la durée de refroidissement requise desdits moules.

Une installation de formage d'articles en verre creux comprend ainsi une machine de formage et un dispositif de production d'air ventilé pour fournir de l'air aux moules ébaucheur et finisseur afin de les refroidir.

De plus, les différentes étapes de formage qui sont réalisées au sein des sections d'une machine de formage sont pilotées par une unité de pilotage que comprend ladite machine de formage.

Cette unité de pilotage a notamment pour fonctions :
- les ouvertures et les fermetures des moules ébaucheur et finisseur pendant des plages de temps déterminées. Il s'agit du pilotage des mouvements des moules ébaucheur et finisseur ;
- l'alimentation en air des moules ébaucheur et finisseur afin de les refroidir pendant lesdites plages de temps déterminées de refroidissement desdits moules, l'air provenant du dispositif de production d'air.

Certaines unités de pilotage permettent de faire varier automatiquement les durées de refroidissement des moules ébaucheurs et finisseurs pour garantir que leur température (mesurée) soit maintenue au niveau de la consigne, déterminée par les opérateurs.

Les plages de temps déterminées des ouvertures et des fermetures des moules ébaucheur et finisseur ont été préétablies (ou autrement dit programmées) par un opérateur-verrier. Il en est de même pour les températures de consigne des moules ébaucheur et finisseur, ainsi que pour les plages admissibles de temps déterminées de refroidissement desdits moules.

Le dispositif de production d'air peut par exemple être un ventilateur.

Le dispositif de production d'air comporte sa propre unité de pilotage pour maintenir constante la pression d'air produit à une valeur de pression de consigne déterminée. Cette valeur de pression de consigne déterminée a été préétablie (ou autrement dit programmée) par l'opérateur-verrier. Pour ce faire, l'unité de pilotage peut comprendre un variateur de fréquence qui va réguler la puissance du dispositif de production d'air afin que la pression de consigne déterminée soit maintenue.

En outre, cette pression de consigne déterminée est ajustée par l'unité de pilotage du dispositif de production d'air en fonction de la température de l'air produit pour que le débit massique d'air produit soit maintenu constant quelle que soit la densité de l'air.

Les installations de formage d'articles en verre creux actuelles présentent un inconvénient. Du fait que dans de telles installations de formage, l'unité de pilotage de la machine de formage et l'unité de pilotage du dispositif de production d'air fonctionnent de manière complètement indépendante, les caractéristiques de l'air produit par le dispositif de production d'air et qui est destiné à refroidir les moules ébaucheur et finisseur ne sont pas sélectionnées en fonction des caractéristiques de fonctionnement de la machine de formage qui ont été préétablies/programmées par l'opérateur-verrier. Cela a pour conséquence que la production d'air n'est pas optimisée en fonction du refroidissement requis des moules ébaucheur et finisseur. Cela a un impact sur la consommation énergétique du dispositif de production d'air de l'installation de formage, ainsi que sur son efficacité.

Avec les installations de formage d'articles en verre creux actuelles, lorsque les plages de temps de refroidissement, garantissant le maintien à leur consigne des températures des moules ébaucheur et finisseur de la machine, sont inférieures aux durées admissibles de refroidissement desdits moules ébaucheur et finisseur qui sont dépendantes d'évènements particuliers dans le cycle de formage (ouverture et fermeture des moules, début des étapes de compression, perçage ou pressage, soufflage..., décrits plus haut), la solution d'optimisation des pressions et donc des consommations d'énergie du dispositif de refroidissement consiste à ce que l'opérateur/verrier reprogramme l'unité de pilotage de la machine de formage pour modifier les plages de temps déterminées de refroidissement des moules ébaucheur et finisseur et modifie la pression du dispositif de refroidissement. Cette solution est fastidieuse à mettre en œuvre du fait qu'elle implique la reprogrammation de l'unité de pilotage de la machine de formage.

GB2011128A et US3860407A décrivent des appareils et des procédés permettant de contrôler la température des moules de formage dans des installation de formage d'articles en verre creux.

Les inventeurs de la présente invention ont cherché à surmonter tout ou partie des inconvénients détaillés ci-dessus des installations de formage d'articles en verre creux actuelles pour notamment abaisser la consommation énergétique du dispositif de production d'air et éviter toute reprogrammation fastidieuse de l'unité de pilotage de la machine de formage.

A cet effet, la présente invention concerne une installation de formage d'un article en verre creux comprenant :
- une machine de formage comportant un ensemble de moules comprenant au moins deux moules ;
- un dispositif de production d'air configuré pour fournir un flux d'air pour le refroidissement des moules compris dans l'ensemble de moules ;
- une unité de pilotage primaire configurée pour commander la distribution d'air aux moules de l'ensemble de moules à partir du flux d'air provenant du dispositif de production d'air, le refroidissement d'un moule étant réalisé pour chaque moule de façon périodique pendant une durée de refroidissement comprise dans une plage de temps déterminée compatible avec les contraintes mécaniques d'un cycle de fonctionnement du moule, et
- une unité de pilotage secondaire configurée pour commander le fonctionnement du dispositif de production d'air ;
Et dans laquelle :
- L'unité de pilotage primaire est configurée pour réguler la durée de refroidissement de chaque moule de l'ensemble de moules en fonction d'une température de consigne
- L'unité de pilotage secondaire est configurée pour déterminer une valeur de consigne de la pression de l'air de refroidissement en fonction :
- des durées de refroidissement des moules de l'ensemble de moules ; et
- des plages de temps déterminées des moules de l'ensemble de moules.

Ainsi, avec une installation de formage selon l'invention, l'unité de pilotage secondaire du dispositif de production d'air adapte les caractéristiques de la production d'air (à savoir la durée et la pression) en fonction des caractéristiques de fonctionnement de l'unité de pilotage primaire de la machine de manière à ce que les conditions de formage d'un article en verre creux soient réalisées pour obtenir un article de qualité (à savoir exempts de défauts). Cela est donc bien différent des installations de formage actuelles pour lesquelles il est nécessaire d'adapter les caractéristiques de fonctionnement de la machine de formage aux caractéristiques de refroidissement requises de l'article en verre creux à former.

De plus, la configuration de l'unité de pilotage secondaire est aisée à mettre en œuvre et facilement modifiable lorsqu'on change les caractéristiques de l'article en verre creux à former (par exemple sa masse ou ses dimensions) ou bien lorsque l'on change de moule.

Par plage de temps déterminée compatible avec les contraintes mécaniques d'un cycle de fonctionnement du moule, on entend une plage de temps comprise dans un cycle de fonctionnement du moule dans la machine au cours de laquelle un refroidissement est possible. En fonction de la machine considérée, cette plage de temps peut par exemple correspondre à une durée comprise entre la fermeture et l'ouverture du moule, ou à une durée correspondant à la totalité de la durée du cycle de fonctionnement.

Selon une possibilité, l'unité de pilotage secondaire est configurée pour comparer une durée de refroidissement la plus longue parmi les durées de refroidissement des moules de l'ensemble de moules avec une gamme de valeurs déterminée en fonction de la plage de temps déterminée du moule correspondant, et pour maintenir la durée de refroidissement la plus longue dans ladite gamme de valeurs.

Grâce à ces dispositions, si la durée déterminée de refroidissement de l'un des moules à la température de consigne que requiert l'article en verre creux à former est supérieure à la plage de temps déterminée de refroidissement instaurée par l'unité de pilotage primaire, à la différence des installations de formage actuelles, il n'est pas nécessaire de reprogrammer ladite unité de pilotage primaire, mais simplement de configurer l'unité de pilotage secondaire du dispositif de production d'air pour corriger la pression de consigne de façon à augmenter ladite pression de consigne, ce qui a pour effet de provoquer une diminution de la durée déterminée de refroidissement et donc une adaptation de la durée déterminée de refroidissement du moule à ladite plage de temps déterminée de refroidissement.

Aussi, si la durée déterminée du refroidissement la plus longue d'un moule de l'ensemble des moules à la température de consigne que requiert l'article en verre creux à former est inférieure à la plage de temps déterminée de refroidissement instaurée par l'unité de pilotage primaire de la machine de formage, à la différence des installations de formage actuelles qui ne mettent pas en œuvre une optimisation du fonctionnement du dispositif de production d'air, l'unité du pilotage du dispositif de production d'air est configurée pour corriger, en l'augmentant, cette durée déterminée de refroidissement, et ce en abaissant la pression de consigne. Cette baisse de la pression de consigne permet la diminution de la puissance du dispositif de production d'air et donc de réaliser des économies d'énergie. En d'autres termes, avec l'installation de formage selon l'invention, grâce à la configuration de l'unité de pilotage secondaire, il est possible de réaliser des économies d'énergies, en allongeant la durée déterminée du refroidissement du moule pour diminuer, si possible au maximum, la pression de consigne de production d'air.

Selon une possibilité, les durées déterminées de refroidissement sont définies de façon séparée pour chaque moule de l'ensemble de moules ou pour des sous-ensembles de moules de l'ensemble de moules. Selon une possibilité, les plages de temps déterminées sont également définies de façon séparée pour chaque moule de l'ensemble de moules ou pour des sous-ensembles de moules de l'ensemble de moules.

Selon une possibilité, la gamme de valeurs correspond à 85% à 100% de la plage de temps déterminée du moule correspondant.

Selon une possibilité, l'ensemble de moules comprend au moins un moule finisseur et/ou au moins un moule ébaucheur.

Selon une possibilité, l'unité de pilotage primaire est agencée pour piloter les ouvertures et les fermetures des moules.

Selon une possibilité, l'unité de pilotage secondaire est configurée pour définir une valeur de pression de consigne ajustée en fonction de la température de l'air produit.

Grâce à ces dispositions, le débit massique d'air produit est maintenu dans une gamme de valeur nominale ou constant quelle que soit la densité de l'air.

Selon une possibilité, l'unité de pilotage secondaire est configurée pour réguler la commande du dispositif de production d'air en fonction de la valeur de consigne de la pression ajustée.

Selon un mode de réalisation, le troisième module de régulation commande un onduleur fournissant un courant électrique au dispositif de production d'air, le dispositif de production d'air comprenant par exemple un ventilateur.

Selon un mode de réalisation, l'unité de pilotage primaire commande un ensemble de vannes contrôlant la distribution d'air aux moules de l'ensemble de moules dans un ensemble de conduites reliant chaque moule de l'ensemble de moules au dispositif de production d'air.

La présente invention concerne également un procédé de commande d'une installation de formage d'un article en verre creux comprenant :
- une machine de formage comportant un ensemble de moules comprenant au moins deux moules ;
- un dispositif de production d'air configuré pour fournir un flux d'air pour le refroidissement des moules compris dans l'ensemble de moules ;
Le procédé de commande comprenant :
- une étape de commande de distribution réalisant une commande de la distribution d'air aux moules de l'ensemble de moules à partir du flux d'air provenant du dispositif de production d'air sur la base d'une commande de distribution, le refroidissement d'un moule étant réalisé pour chaque moule de façon périodique pendant une durée de refroidissement comprise dans une plage de temps déterminée compatible avec les contraintes mécaniques d'un cycle de fonctionnement du moule, et
- une étape de commande de production réalisant une commande du fonctionnement du dispositif de production d'air sur la base d'une commande de production ;
Le procédé de commande comprenant en outre :
- une étape de régulation de la durée de refroidissement de chaque moule de l'ensemble de moules en fonction d'une température de consigne de façon à définir la commande de distribution ;
- une étape de détermination d'une valeur de consigne d'une pression de l'air de refroidissement en fonction des durées de refroidissement des moules de l'ensemble de moules ; et des plages de temps déterminées des moules de l'ensemble de moules de façon à définir la commande de production.

Selon une possibilité, l'étape de détermination d'une valeur de consigne d'une pression de l'air de refroidissement en fonction des durées de refroidissement des moules de l'ensemble de moules ; et des plages de temps déterminées des moules de l'ensemble de moules comprend une comparaison d'une durée de refroidissement la plus longue parmi les durées de refroidissement des moules de l'ensemble de moules avec une gamme de valeurs déterminée en fonction de la plage de temps déterminée du moule correspondant, la valeur de consigne d'une pression étant déterminée pour maintenir la durée de refroidissement la plus longue dans ladite gamme de valeurs.

Selon une possibilité, la gamme de valeurs correspond à 85% à 100% de la plage de temps déterminée du moule correspondant.

Selon une possibilité, le procédé comprend une étape de définition d'une valeur de pression de consigne ajustée en fonction de la température de l'air produit.

Selon une possibilité, le procédé comprend une étape de régulation de la commande de production dans laquelle on régule la commande du dispositif de production d'air en fonction de la valeur de consigne de la pression, ou de la valeur de la pression de consigne ajustée.

L'invention sera mieux comprise à l'aide de la description détaillée qui est exposée ci-dessous en regard du dessin annexé dans lequel :
[Fig. 1] est un schéma d'ensemble d'une installation de formage selon l'invention.
[Fig. 2] est un ordinogramme du procédé de commande selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

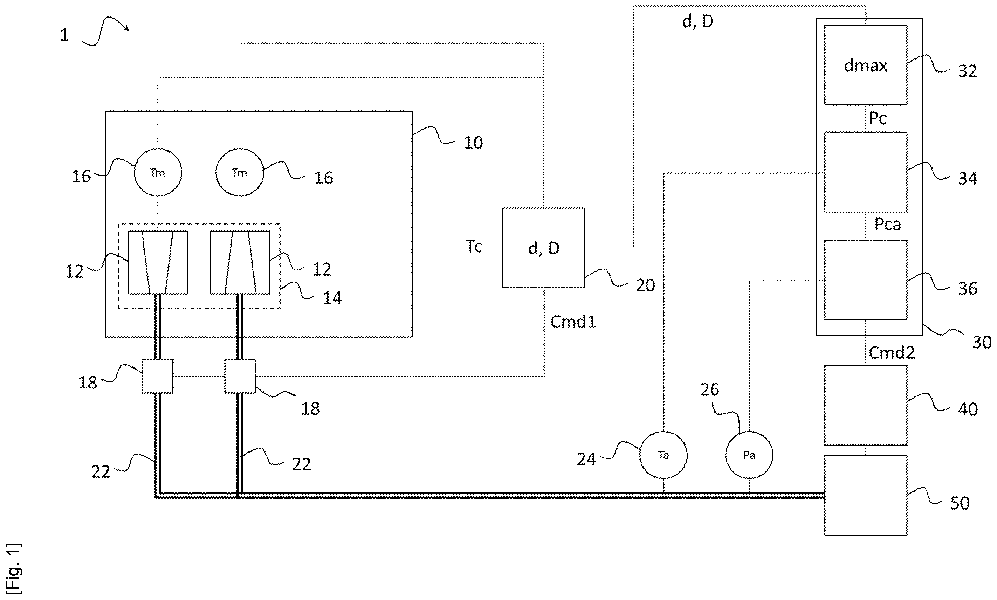

Comme cela est représentée de façon schématique sur la figure 1, une installation de formage 1 d'un article en verre creux selon un mode de réalisation de l'invention comprend une machine de formage 10 comportant un ensemble de moules 14 comprenant au moins deux moules 12. En particulier, la machine de formage 10 peut comprendre plusieurs sections avec des moules ébaucheurs et finisseurs. L'installation de formage 1 comprend également un dispositif de production d'air 50 configuré pour fournir un flux d'air pour le refroidissement des moules 12 compris dans l'ensemble de moules 14. L'ensemble de moule considéré peut comprendre uniquement des moules ébaucheurs, uniquement des moules finisseurs, ou encore un mélange de moule ébaucheurs et finisseurs.

L'installation de formage 1 comprend une unité de pilotage primaire 20 configurée pour commander la distribution d'air aux moules de l'ensemble de moules à partir du flux d'air provenant du dispositif de production d'air 50, le refroidissement d'un moule étant réalisé pour chaque moule 12 de façon périodique pendant une durée de refroidissement d comprise dans une plage de temps déterminée D compatible avec les contraintes mécaniques d'un cycle de fonctionnement du moule 12. L'unité de pilotage primaire 20 est configurée pour réguler la durée de refroidissement d de chaque moule 12 de l'ensemble de moules en fonction d'une température de consigne Tc. L'unité de pilotage primaire 20 peut utiliser pour cela des mesures de température Tm des moules 12 de l'ensemble de moules 14 provenant de capteurs de température 16 disposés dans la machine de formage 10. L'unité de pilotage primaire 20 peut être agencée également pour piloter les ouvertures et les fermetures des moules. L'unité de pilotage primaire de la machine de formage peut être un automate dit « timer » permettant de programmer les évènements de chaque section de la machine de formage, auquel on adjoint un système de contrôle des durées de refroidissement des moules ébaucheurs et finisseurs permettant de garantir leur maintien aux températures de consigne respectives. Selon un mode de réalisation, l'unité de pilotage primaire 20 commande, en définissant une commande de distribution Cmd1, un ensemble de vannes 18 contrôlant la distribution d'air aux moules de l'ensemble de moules dans un ensemble de conduites 22 reliant chaque moule 12 de l'ensemble de moules 14 au dispositif de production d'air 50. A titre d'exemple, la température de consigne pour un moule ébaucheur peut être comprise entre 400°C et 520°C, de préférence entre 420°C et 480°C. La température de consigne Tc pour un moule finisseur peut être comprise entre 400°C et 560°C, de préférence entre 450°C et 550°C. La température de consigne Tc pour chaque moule peut être déterminée en fonction des caractéristiques de l'article en verre creux à former par exemple sa masse, ses dimensions et sa forme, ainsi que des caractéristiques du moule par exemple ses dimensions, sa matière Il est parfaitement à la portée de l'homme du métier un verrier de savoir déterminer cette température de consigne Tc.

L'installation de formage 1 comprend une unité de pilotage secondaire 30 configurée pour commander le fonctionnement du dispositif de production d'air 20. L'unité de pilotage secondaire 30 est configurée pour déterminer une valeur de consigne de la pression Pc de l'air de refroidissement en fonction des durées de refroidissement d des moules 12 de l'ensemble de moule 14 ; et des plages de temps D déterminées des moules 12 de l'ensemble de moule 14.

L'unité de pilotage secondaire 30 est en particulier configurée pour comparer une durée de refroidissement dmax la plus longue parmi les durées de refroidissement d des moules 12 de l'ensemble de moule 14 avec une gamme de valeurs déterminée en fonction de la plage de temps D déterminée du moule 12 correspondant, et pour maintenir la durée de refroidissement la plus longue dmax dans ladite gamme de valeurs. La gamme de valeurs correspond notamment à 85% à 100% de la plage de temps D déterminée du moule 12 correspondant. L'unité de pilotage secondaire 30 peut comprendre un premier module de régulation 32 réalisant la détermination de la valeur de consigne de la pression Pc. La pression de consigne du dispositif de production d'air peut être comprise entre 500 mm H2O et 2000 mm H2O, de préférence entre 800 mm H2O et 1500 mm H2O.

L'unité de pilotage secondaire 30 est configurée pour définir une valeur de pression de consigne ajustée Pca en fonction de la température de l'air produit Ta. L'unité de pilotage secondaire 30 peut utiliser pour cela des mesures de température Ta de l'air produit par le dispositif de production d'air 50 provenant d'un capteur de température 24 disposé sur une conduite 22 de sortie du dispositif de production d'air 50. L'unité de pilotage secondaire 30 peut comprendre un deuxième module de régulation 34 réalisant la définition de la valeur de pression de consigne ajustée Pca.

L'unité de pilotage secondaire 30 est configurée pour réguler une commande de production Cmd2 du dispositif de production d'air 50 en fonction de la valeur de consigne de la pression ajustée Pca. L'unité de pilotage secondaire 30 peut utiliser pour cela des mesures de pression Pa de l'air produit par le dispositif de production d'air 50 provenant d'un capteur de pression 26 disposé sur une conduite 22 de sortie du dispositif de production d'air 50. L'unité de pilotage secondaire 30 peut comprendre à cet effet un troisième module de régulation 36. Selon un mode de réalisation, le troisième module de régulation commande un onduleur 40 compris dans l'installation de formage 1 fournissant un courant électrique au dispositif de production d'air 50, le dispositif de production d'air comprenant par exemple un ventilateur.

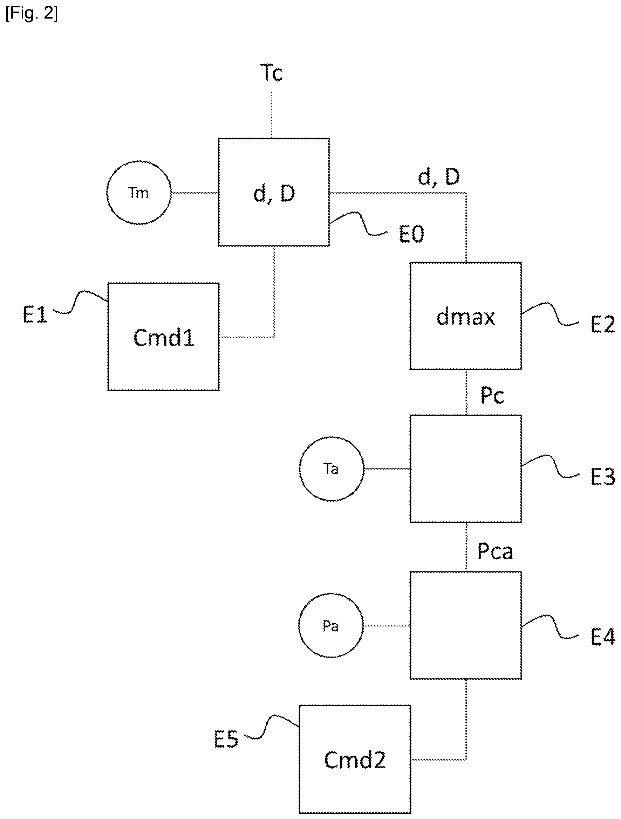

Ainsi, comme cela est représenté sur la figure 2, un procédé de commande d'une installation de formage 1 d'un article en verre creux selon l'invention peut être mis en œuvre en comprenant les étapes suivantes :
- une étape de régulation E0 d'une durée de refroidissement d de chaque moule 12 de l'ensemble de moules en fonction d'une température de consigne Tc, en utilisant des mesures de température Tm des moules 12 de l'ensemble de moules 14, de façon à définir une commande de distribution Cmd1 ;
- une étape de commande de distribution E1 réalisant une commande de la distribution d'air aux moules de l'ensemble de moules à partir du flux d'air provenant du dispositif de production d'air 50 sur la base d'une commande de distribution Cmd1, le refroidissement d'un moule étant réalisé pour chaque moule 12 de façon périodique pendant la durée de refroidissement d comprise dans une plage de temps déterminée D compatible avec les contraintes mécaniques d'un cycle de fonctionnement du moule 12.

Selon un mode de mise en œuvre, les étapes E0 et E1 sont mises en œuvre par l'unité de pilotage primaire.

Le procédé de commande comprenant en outre une étape de détermination E2 d'une valeur de consigne d'une pression Pc de l'air de refroidissement en fonction des durées de refroidissement d des moules 12 de l'ensemble de moules 14 ; et des plages de temps D déterminées des moules 12 de l'ensemble de moules 14 de façon à définir la commande de production Cmd2. L'étape E2 comprend, selon un mode de mise en œuvre une comparaison d'une durée de refroidissement dmax la plus longue parmi les durées de refroidissement d des moules 12 de l'ensemble de moules 14 avec une gamme de valeurs déterminée en fonction de la plage de temps D déterminée du moule 12 correspondant, la valeur de consigne d'une pression Pc étant déterminée pour maintenir la durée de refroidissement la plus longue dmax dans ladite gamme de valeurs. En particulier, la gamme de valeurs correspond à 85% à 100% de la plage de temps D déterminée du moule 12 correspondant. L'étape E2 peut être réalisée en utilisant une méthode de type régulateur PID - proportionnel, intégral, dérivé.

Selon un mode de mise en œuvre, le procédé comprend une étape de définition E3 d'une valeur de pression de consigne ajustée Pca en fonction de la température de l'air produit Ta.

Le procédé comprend en outre une étape de régulation de la commande de production E4 dans laquelle on régule la commande de production Cmd2 en fonction de la valeur de consigne de la pression Pc ou de la valeur de la pression de consigne ajustée Pca, en utilisant des mesures de pression Pa de l'air produit par le dispositif de production d'air 50.

Le procédé comprend enfin une étape de commande de production E5 réalisant une commande du fonctionnement du dispositif de production d'air 20 sur la base de la commande de production Cmd2.

Selon un mode de mise en œuvre, les étapes E2 à E5 sont mises en œuvre par l'unité de pilotage secondaire.

## Revendications

1. Installation de formage (1) d'un article en verre creux comprenant :
- une machine de formage (10) comportant un ensemble de moules (14) comprenant au moins deux moules (12) ;
- un dispositif de production d'air (50) configuré pour fournir un flux d'air pour le refroidissement des moules (12) compris dans l'ensemble de moules (14) ;
- une unité de pilotage primaire (20) configurée pour commander la distribution d'air aux moules de l'ensemble de moules à partir du flux d'air provenant du dispositif de production d'air (50), le refroidissement d'un moule étant réalisé pour chaque moule (12) de façon périodique pendant une durée de refroidissement (d) comprise dans une plage de temps déterminée (D) compatible avec les contraintes mécaniques d'un cycle de fonctionnement du moule (12), et
- une unité de pilotage secondaire (30) configurée pour commander le fonctionnement du dispositif de production d'air (20) ;
Et dans laquelle :
- L'unité de pilotage primaire (20) est configurée pour réguler la durée de refroidissement (d) de chaque moule (12) de l'ensemble de moules en fonction d'une température de consigne (Tc)
- L'unité de pilotage secondaire (30) est configurée pour déterminer une valeur de consigne de la pression (Pc) de l'air de refroidissement en fonction :
∘ des durées de refroidissement (d) des moules (12) de l'ensemble de moules (14) ; et
∘ des plages de temps (D) déterminées des moules (12) de l'ensemble de moules (14).

2. Installation selon la revendication 1, dans laquelle l'unité de pilotage secondaire (30) est configurée pour comparer une durée de refroidissement (dmax) la plus longue parmi les durées de refroidissement (d) des moules (12) de l'ensemble de moules (14) avec une gamme de valeurs déterminée en fonction de la plage de temps (D) déterminée du moule (12) correspondant, et pour maintenir la durée de refroidissement la plus longue (dmax) dans ladite gamme de valeurs.

3. Installation selon la revendication 2, dans laquelle la gamme de valeurs correspond à 85% à 100% de la plage de temps (D) déterminée du moule (12) correspondant.

4. Installation selon l'une quelconque des revendications précédentes, dans laquelle l'ensemble de moules (14) comprend au moins un moule finisseur et/ou au moins un moule ébaucheur.

5. Installation selon l'une quelconque des revendications précédentes, dans laquelle l'unité de pilotage primaire est agencée pour piloter les ouvertures et les fermetures des moules.

6. Installation selon l'une quelconque des revendications précédentes, dans laquelle l'unité de pilotage secondaire (30) est configurée pour définir une valeur de pression de consigne ajustée (Pca) en fonction de la température de l'air produit (Ta).

7. Installation selon l'une quelconque des revendications précédentes, dans laquelle l'unité de pilotage secondaire (30) est configurée pour réguler la commande (Cmd2) du dispositif de production d'air (50) en fonction de la valeur de consigne de la pression ajustée (Pca).

8. Procédé de commande d'une installation de formage (1) d'un article en verre creux comprenant :
- une machine de formage (10) comportant un ensemble de moules (14) comprenant au moins deux moules (12) ;
- un dispositif de production d'air (50) configuré pour fournir un flux d'air pour le refroidissement des moules (12) compris dans l'ensemble de moules (14) ;
Le procédé de commande comprenant :
- une étape de commande de distribution (E1) réalisant une commande de la distribution d'air aux moules de l'ensemble de moules à partir du flux d'air provenant du dispositif de production d'air (50) sur la base d'une commande de distribution (Cmd1), le refroidissement d'un moule étant réalisé pour chaque moule (12) de façon périodique pendant une durée de refroidissement (d) comprise dans une plage de temps déterminée (D) compatible avec les contraintes mécaniques d'un cycle de fonctionnement du moule (12), et
- une étape de commande de production (E5) réalisant une commande du fonctionnement du dispositif de production d'air (20) sur la base d'une commande de production (Cmd2) ;
Le procédé de commande comprenant en outre :
- une étape de régulation (E0) de la durée de refroidissement (d) de chaque moule (12) de l'ensemble de moules en fonction d'une température de consigne (Tc) de façon à définir la commande de distribution (Cmd1) ;
- une étape de détermination (E2) d'une valeur de consigne d'une pression (Pc) de l'air de refroidissement en fonction des durées de refroidissement (d) des moules (12) de l'ensemble de moules (14) ; et des plages de temps (D) déterminées des moules (12) de l'ensemble de moules (14) de façon à définir la commande de production (Cmd2).

9. Procédé selon la revendication 8, dans lequel l'étape de détermination (E2) d'une valeur de consigne d'une pression (Pc) de l'air de refroidissement en fonction des durées de refroidissement (d) des moules (12) de l'ensemble de moules (14) ; et des plages de temps (D) déterminées des moules (12) de l'ensemble de moules (14) comprend une comparaison d'une durée de refroidissement (dmax) la plus longue parmi les durées de refroidissement (d) des moules (12) de l'ensemble de moules (14) avec une gamme de valeurs déterminée en fonction de la plage de temps (D) déterminée du moule (12) correspondant, la valeur de consigne d'une pression (Pc) étant déterminée pour maintenir la durée de refroidissement la plus longue (dmax) dans ladite gamme de valeurs.

10. Procédé selon la revendication 9, dans lequel la gamme de valeurs correspond à 85% à 100% de la plage de temps (D) déterminée du moule (12) correspondant.

11. Procédé selon l'une quelconque des revendications 8 à 10, comprenant une étape de définition (E3) d'une valeur de pression de consigne ajustée (Pca) en fonction de la température de l'air produit (Ta).

12. Procédé selon l'une quelconque des revendications 8 à 11, comprenant une étape de régulation de la commande de production (E4) dans laquelle on régule la commande (Cmd2) du dispositif de production d'air (50) en fonction de la valeur de consigne de la pression (Pc) selon l'une des revendications 8 à 10, ou de la valeur de la pression de consigne ajustée (Pca) selon la revendication 11.

## Patentansprüche

1. Anlage zum Formen (1) eines hohlen Glasartikels, umfassend:
- eine Formmaschine (10), die eine Formenbaugruppe (14) umfasst, die mindestens zwei Formen (12) umfasst;
- eine Lufterzeugungsvorrichtung (50), die so eingerichtet ist, dass sie einen Luftstrom zur Kühlung der in der Formenbaugruppe (14) enthaltenen Formen (12) bereitstellt;
- eine primäre Steuereinheit (20), die so eingerichtet ist, dass sie die Luftverteilung zu den Formen der Formenbaugruppe anhand des von der Lufterzeugungsvorrichtung (50) stammenden Luftstroms steuert, wobei die Kühlung einer Form für jede Form (12) periodisch während eines Abkühlzeitraums (d) durchgeführt wird, der innerhalb eines bestimmten Zeitbereichs (D) liegt, der mit den mechanischen Beanspruchungen eines Betriebszyklus der Form (12) kompatibel ist, und
- eine sekundäre Steuereinheit (30), die so eingerichtet ist, dass sie den Betrieb der Lufterzeugungsvorrichtung (20) steuert;
und wobei:
- die primäre Steuereinheit (20) so eingerichtet ist, dass sie den Kühlzeitraum (d) jeder Form (12) der Formenbaugruppe in Abhängigkeit von einer Solltemperatur (TC) regelt
- die sekundäre Steuereinheit (30) so eingerichtet ist, dass sie einen Sollwert für den Druck (Pc) der Kühlluft in Abhängigkeit von Folgendem bestimmt:
∘ Abkühlzeiträumen (d) der Formen (12) der Formenbaugruppe (14); und
∘ bestimmten Zeitbereichen (D) der Formen (12) der Formenbaugruppe (14).

2. Anlage nach Anspruch 1, wobei die sekundäre Steuereinheit (30) so eingerichtet ist, dass sie einen längsten Abkühlzeitraum (dmax) unter den Abkühlzeiträumen (d) der Formen (12) der Formenbaugruppe (14) mit einem bestimmten Wertebereich vergleicht, der in Abhängigkeit von dem bestimmten Zeitbereich (D) der entsprechenden Form (12) bestimmt wird, und den längsten Abkühlzeitraum (dmax) innerhalb des Wertebereichs einhält.

3. Anlage nach Anspruch 2, wobei der Wertebereich 85 % bis 100 % des bestimmten Zeitbereichs (D) der entsprechenden Form (12) entspricht.

4. Anlage nach einem der vorhergehenden Ansprüche, wobei die Formenbaugruppe (14) mindestens eine Fertigform und/oder mindestens eine Vorform umfasst.

5. Anlage nach einem der vorhergehenden Ansprüche, wobei die primäre Steuereinheit so angeordnet ist, dass sie das Öffnen und Schließen der Formen steuert.

6. Anlage nach einem der vorhergehenden Ansprüche, wobei die sekundäre Steuereinheit (30) so eingerichtet ist, dass sie einen eingestellten Drucksollwert (Pca) in Abhängigkeit von der Temperatur der erzeugten Luft (Ta) definiert.

7. Anlage nach einem der vorhergehenden Ansprüche, wobei die sekundäre Steuereinheit (30) so eingerichtet ist, dass sie die Steuerung (Cmd2) der Lufterzeugungsvorrichtung (50) in Abhängigkeit von dem eingestellten Drucksollwert (Pca) regelt.

8. Verfahren zur Steuerung einer Anlage zum Formen (1) eines hohlen Glasartikels, umfassend:
- eine Formmaschine (10), die eine Formenbaugruppe (14) umfasst, die mindestens zwei Formen (12) umfasst;
- eine Lufterzeugungsvorrichtung (50), die so eingerichtet ist, dass sie einen Luftstrom zur Kühlung der in der Formenbaugruppe (14) enthaltenen Formen (12) bereitstellt;
wobei das Steuerungsverfahren Folgendes umfasst:
- einen Verteilungssteuerungsschritt (E1), der eine Steuerung der Luftverteilung an die Formen der Formenbaugruppe ausgehend von dem von der Lufterzeugungsvorrichtung (50) stammenden Luftstrom auf der Grundlage einer Verteilungssteuerung (Cmd1) durchführt, wobei die Kühlung einer Form für jede Form (12) periodisch für einen Abkühlzeitraum (d) durchgeführt wird, der innerhalb eines bestimmten Zeitbereichs (D) liegt, der mit den mechanischen Beanspruchungen eines Betriebszyklus der Form (12) kompatibel ist, und
- einen Erzeugungssteuerungsschritt (E5), der eine Steuerung des Betriebs der Lufterzeugungsvorrichtung (20) auf der Grundlage einer Erzeugungssteuerung (Cmd2) durchführt;
wobei das Steuerungsverfahren ferner Folgendes umfasst:
- einen Schritt des Regelns (E0) des Abkühlzeitraums (d) jeder Form (12) der Formenbaugruppe in Abhängigkeit von einer Solltemperatur (Tc), um den Steuerungsbefehl (Cmd1) zu definieren;
- einen Schritt (E2) des Bestimmens eines Sollwerts eines Drucks (Pc) der Kühlluft in Abhängigkeit von den Abkühlzeiten (d) der Formen (12) der Formenbaugruppe (14) und den bestimmten Zeitbereichen (D) der Formen (12) der Formenbaugruppe (14), um die Erzeugungssteuerung (Cmd2) zu definieren.

9. Verfahren nach Anspruch 8, wobei der Schritt (E2) das Bestimmen eines Sollwerts eines Drucks (Pc) der Kühlluft in Abhängigkeit von den Abkühlzeiträumen (d) der Formen (12) der Formenbaugruppe (14) und der bestimmten Zeitbereiche (D) der Formen (12) der Formenbaugruppe (14) einen Vergleich eines längsten Abkühlzeitraums (dmax) unter den Kühldauern (d) der Formen (12) der Formenbaugruppe (14) mit einem bestimmten Wertebereich in Abhängigkeit von dem bestimmten Zeitbereich (D) der entsprechenden Form (12) umfasst, wobei der Sollwert eines Drucks (Pc) bestimmt wird, um den längsten Abkühlzeitraum (dmax) innerhalb des Wertebereichs einzuhalten.

10. Verfahren nach Anspruch 9, wobei der Wertebereich 85 % bis 100 % des bestimmten Zeitbereichs (D) der entsprechenden Form (12) entspricht.

11. Verfahren nach einem der Ansprüche 8 bis 10, umfassend einen Schritt des Definierens (E3) eines eingestellten Drucksollwerts (Pca) in Abhängigkeit von der Temperatur der erzeugten Luft (Ta).

12. Verfahren nach einem der Ansprüche 8 bis 11, umfassend einen Schritt des Regelns der Erzeugungssteuerung (E4), wobei die Steuerung (Cmd2) der Lufterzeugungsvorrichtung (50) in Abhängigkeit von dem Drucksollwert (Pc) nach einem der Ansprüche 8 bis 10 oder von dem Wert des eingestellten Solldrucks (Pca) nach Anspruch 11 geregelt wird.

## Claims

1. An installation (1) for forming a hollow glass article comprising:
- a forming machine (10) including a set of molds (14) comprising at least two molds (12);
- an air production device (50) configured to provide an air flow for cooling the molds (12) included in the set of molds (14);
- a primary management unit (20) configured to control the distribution of air to the molds of the set of molds from the air flow coming from the air production device (50), the cooling of a mold being carried out for each mold (12) periodically for a cooling duration (d) included in a determined time range (D) that is compatible with the mechanical constraints of an operating cycle of the mold (12), and
- a secondary management unit (30) configured to control the operation of the air production device (20);
And wherein:
- The primary management unit (20) is configured to regulate the cooling duration (d) of each mold (12) of the set of molds according to a set temperature (Tc)
- The secondary management unit (30) is configured to determine a set value of the pressure (Pc) of the cooling air according to:
∘ the cooling durations (d) of the molds (12) of the set of molds (14); and
∘ the determined time ranges (D) of the molds (12) of the set of molds (14).

2. The installation according to claim 1, wherein the secondary management unit (30) is configured to compare a longest cooling duration (dmax) among the cooling durations (d) of the molds (12) of the set of molds (14) with a range of values determined based on the determined time range (D) of the corresponding mold (12), and to maintain the longest cooling duration (dmax) within said range of values.

3. The installation according to claim 2, wherein the range of values corresponds to 85% to 100% of the determined time range (D) of the corresponding mold (12).

4. The installation according to any one of the preceding claims, wherein the set of molds (14) comprises at least one blow mold and/or at least one blank mold.

5. The installation according to any one of the preceding claims, wherein the primary management unit is arranged to manage the opening and closing of the molds.

6. The installation according to any one of the preceding claims, wherein the secondary management unit (30) is configured to define an adjusted set pressure value (Pca) according to the temperature of the produced air (Ta).

7. The installation according to any one of the preceding claims, wherein the secondary management unit (30) is configured to regulate the control (Cmd2) of the air production device (50) according to the adjusted set pressure value (Pca).

8. A method for controlling an installation (1) for forming a hollow glass article comprising:
- a forming machine (10) including a set of molds (14) comprising at least two molds (12);
- an air production device (50) configured to provide an air flow for cooling the molds (12) included in the set of molds (14);
The control method comprising:
- a distribution control step (E1) carrying out a control of the distribution of air to the molds of the set of molds from the air flow coming from the air production device (50) based on a distribution control (Cmd1), the cooling of a mold being carried out for each mold (12) periodically for a cooling duration (d) included in a determined time range (D) compatible with the mechanical constraints of an operating cycle of the mold (12), and
- a production control step (E5) carrying out a control of the operation of the air production device (20) based on a production control (Cmd2);
The control method further comprising:
- a step (E0) of regulating the cooling duration (d) of each mold (12) of the set of molds according to a set temperature (Tc) so as to define the distribution control (Cmd1);
- a step (E2) of determining a set value of a pressure (Pc) of the cooling air as according to the cooling durations (d) of the molds (12) of the set of molds (14); and the determined time ranges (D) of the molds (12) of the set of molds (14) so as to define the production control (Cmd2).

9. The method according to claim 8, wherein the step (E2) of determining a set value of a pressure (Pc) of the cooling air as a function of the cooling durations (d) of the molds (12) of the set of molds (14); and the determined time ranges (D) of the molds (12) of the set of molds (14) comprises a comparison of a longest cooling duration (dmax) among the cooling durations (d) of the molds (12) of the set of molds (14) with a range of values determined according to the determined time range (D) of the corresponding mold (12), the set value of a pressure (Pc) being determined to maintain the longest cooling duration (dmax) within said range of values.

10. The method according to claim 9, wherein the range of values corresponds to 85% to 100% of the determined time range (D) of the corresponding mold (12).

11. The method according to any one of claims 8 to 10, comprising a step (E3) of defining an adjusted set pressure value (Pca) according to the temperature of the produced air (Ta).

12. The method according to any one of claims 8 to 11, comprising a step (E4) of regulating the production control in which the control (Cmd2) of the air production device (50) is regulated according to the set value of the pressure (Pc) according to any of claims 8 to 10, or of the adjusted set pressure value (Pca) according to claim 11.
